# EUROPEAN PATENT APPLICATION

(11) **EP 2 009 932 A1**
(43) Date of publication of application: **31.12.2008**
(21) Application number: 07720830.4
(22) Date of filing: 17.04.2007
(51) Int. Cl.: H04Q 7/20

(54) **SYSTEM, EQUIPMENT AND METHOD FOR DETERMINING OMITTED- CONFIGURATION ADJOINING CELL**

(30) Priority: 17.04.2006 CN 200610076201
(71) Applicant: Huawei Technologies Co., Ltd., Longgang District, Shenzhen, Guangdong 518129 (CN)
(72) Inventor: WANG, Hongwei, Guangdong 518129 (CN)
(74) Representative: Hengelhaupt, Jürgen
(86) International application number: PCT/CN2007/001257
(87) International publication number: WO 2007/118432

(57) **Abstract**

The present invention relates to a system and a method for determining a missing adjacent cell. The system includes (i) a detecting unit, configured to detect the signal quality of the cell which is not in the adjacent cell list, report the trigger event that occurs when the signal quality reaches the trigger threshold to the determining unit; (ii) a determining unit, configured to judge whether the primary scramble in the trigger event is in the adjacent cell list, perform soft handover to the cell accessible to the UE corresponding to the primary scramble which is not in the adjacent cell list, and determine the missing adjacent cell according to the soft handover result. The method includes: receiving the trigger event sent by the UE; judging whether the primary scramble in the trigger event is in the adjacent cell list, searching for the cell corresponding to the primary scramble whcich is not in the adjacent cell list, establishing a radio link with the cell, commanding the UE to perform soft handover; and determining the missing adjacent cell according to the soft handover result, with a view to solving the problem in the prior art, that is, inability of detecting the missing cell in time or adding it into the adjacent cell list.

## Description

This application claims a priority from the Chinese Patent Application No. 200610076201.5, filed with the Chinese Patent Office on April 17, 2006 and entitled "System and Method for Handling Missing Adjacent Cells in a Wireless Network", the contents of which are incorporated herein by reference in their entirety.

### Technical Field

This invention relates to mobile communication technologies, and in particular, to a system, apparatus and method for determining a missing adjacent cell.

### Background

In a cellular mobile communication system, when user equipment (UE) moves from a cell to another, the UE must be handed over from the cell it originally resides to the cell it newly accesses. Through the handover, the location of the UE and the resource it uses are updated.

Handover is the most important part in mobility management. It refers to the process in which the link between the original NodeB and the UE is replaced by the link between a new NodeB and the UE when the UE approaches the edge of the original serving cell and is to enter another serving cell.

In a WCDMA network, handover is categorized into hard handover, soft handover (handover between cells of the same frequency), and softer handover (handover between sectors of the same frequency), depending on the status of connection and disconnection between the UE in a conversation and the network and the status of frequency occupation.

Soft handover (SHO) means that the UE does not disconnect from the original NodeB when it needs to communicate with a new NodeB, that is, during handover of the UE between the coverage edges of two or more NodeBs, the UE first establishes a connection with a new cell by using the same frequency before disconnecting from the original cell, and keeps communications with several NodeBs at the same time until certain conditions are met.

The advantage of soft handover is to keep communications uninterrupted when the UE is crossing a cell, which greatly reduces the number of call drops caused by handover. In addition, soft handover enables maximal or selective combination of uplink signals and maximal combination of downlink signals, which also improves the performance of radio links.

Soft handover is a distinctive feature of WCDMA as against other radio communication technologies. In soft handover, after establishing a radio connection with a NodeB, the UE continues to measure cells in a monitored set. Once a cell in the monitored set meets a certain condition, the UE reports to the radio network controller (RNC). The RNC decides whether to perform handover according to the event report. If the RNC decides to perform handover, it delivers a handover command, and the UE will establish a connection with that cell and add the cell to an active set. In the case of soft handover, the UE establishes connections with multiple cells concurrently and generates a combined gain. Moreover, in the process of moving, the UE keeps connected with at least one cell, thus producing better user experience and performance as against hard handover.

According to the 3GPP protocol, the RNC maintains a list of adjacent cells for the current serving cell. Except cells in the active set that are connected to the UE, all cells in this list are in the monitored set. Therefore, the UE primarily measures the monitored set to perform timely handover. In the actual network construction, however, adjacent cells are often missing because sites are established in batches. The missing adjacent cells are already established and begin to transmit signals, but are not added to the adjacent cell list for certain reasons. Therefore, they are not in the monitored set, without being measured by the UE. Meanwhile, the WCDMA system is a self-interfering system. If the UE is very close to a NodeB but unable to establish a connection with a cell of the NodeB, the downlink signals of the cell will interfere with the UE severely, and lead to downlink out-of-sync and call drop of the UE; the uplink signals of the UE will bring high uplink noise to the cell, reduce the uplink capacity of the cell, and deteriorate the quality of service (QoS).

The adjacent cell list in the WCDMA network includes an active set, a monitored set, a detected set and missing adjacent cells.

The active set is a set of cells currently connected to the UE.

The monitored set is a set of candidate cells disconnected from the UE currently, whose signal strength and quality need to be monitored by the UE according to the instruction (measurement control message) of the RNC. The cells in the monitor set are adjacent cells of the current serving cell, and exist in the adjacent cell list of the current serving cell.

The detected set is a set of cells disconnected from the UE currently and not included in the monitored set, whose signals can be detected by the UE. A detected set usually contains missing adjacent cells.

Missing adjacent cells are the cells that have very strong signals and actually become adjacent cells of the current serving cell. Missing adjacent cells are somehow missing in the configuration of adjacent cell relations, and hence not included in the monitored set. But they can be detected in the detected set.

Currently, missing adjacent cells are detected and handled in two ways, as described below:
(i) The first method for detecting and handling missing adjacent cells solely relies on the drive test of network optimizers. Once a call drop point is detected, a network optimizer can use a scanner to test all scrambles measurable at the call drop point, find the missing adjacent cells and add them to the adjacent cell list. This method is rather inefficient and consumes much time, manpower and resources. For a network with over one thousand sites, the optimization is slow and costly if it solely relies on manpower.
(ii) The second method for detecting and handling missing adjacent cells is as follows: the RNC controls the UE to report cells of the detected set, and the RNC records such cells; afterward, a network optimization tool or a network optimizer analyzes such cells, finds the missing adjacent cells and adds them to the adjacent cell list. This method is a little better than the first method, that is, the UE can report cells of a detected set, but the RNC is unable to originate handover accordingly and call drops are still caused to the UE. The subsequent analysis still needs manual handling. In large networks, this method consumes much time and manpower.

### Summary

An embodiment of the invention provides a system and apparatus for determining a missing adjacent cell to solve the problem in the prior art, that is, inability to detect a missing adjacent cell timely and add it to the adjacent cell list.

An embodiment of the invention also provides a method for determining missing adjacent cells to solve the problem in the prior art, that is, inability to detect missing adjacent cells timely and add them to the adjacent cell list.

In order to solve the foregoing technical problem, an embodiment of the invention provides a system for determining a missing adjacent cell. The system includes:
a detecting unit, configured to detect the signal quality of the cells which are not in an adjacent cell list, and report a trigger event that occurs when the signal quality reaches a trigger threshold to a missing adjacent cell determining unit; and
a missing adjacent cell determining unit, configured to judge whether the primary scramble in the trigger event is in the adjacent cell list, and if not, perform soft handover to all cells that are accessible to the UE and correspond to the primary scramble, and determine a missing adjacent cell according to the soft handover result.

Accordingly, an embodiment of the invention provides a method for determining a missing adjacent cell, including:
reporting, by an UE, a trigger event that occurs when the signal quality reaches a trigger threshold;
judging, by a network, whether the primary scramble in the trigger event is in an adjacent cell list;
performing, by the network, soft handover to one or more cells corresponding to the primary scramble if the primary scramble in the trigger event is in an adjacent cell list; and
determining, by the network, a missing adjacent cell according to the soft handover result.

Moreover, an embodiment of the invention provides an apparatus for determining a missing adjacent cell, including:
a judging unit, configured to judge whether the primary scramble in a received trigger event is in an adjacent cell list; send a negative judgment result to a searching unit; and send a positive judgment result to a determining unit;
a searching unit, configured to search for cells that are accessible to the UE and correspond to the primary scramble according to the judgment result, establish a radio link with the cells, and command the UE to perform soft handover to the cells that cover the UE; and send the handover result to a determining unit; and
a determining unit, connected to the judging unit and the searching unit, and configured to determine a cell corresponding to the primary scramble in the adjacent cell list as a missing adjacent cell according to the search result or determine a connected cell as a missing adjacent cell according to the soft handover result.

Accordingly, an embodiment of the invention provides a method for determining a missing adjacent cell, including:
receiving a trigger event sent by the UE;
judging whether the primary scramble in the trigger event is in an adjacent cell list, and if not, searching for cells corresponding to the primary scramble, establishing a radio link with the cells, and commanding the UE to perform soft handover; and
determining a missing adjacent cell according to the soft handover result.

The foregoing technical scheme shows that the embodiments of the invention enable the UE to trigger soft handover timely as soon as a missing adjacent cell is detected, thus avoiding call drops. Besides, in the case of reusing scrambles, the network side (for example, RNC or server) can accurately identify a missing adjacent cell and add it to the adjacent cell list automatically.

### Brief Description of the Drawings

Figure 1 shows the structure of a system for determining a missing adjacent cell in an embodiment of the invention;
Figure 2 shows the process of a method for determining a missing adjacent cell in an embodiment of the invention;
Figure 3 is a diagram of cells after a missing adjacent cell is handled in a shared radio access network (RAN) in an embodiment of the invention;
Figure 4 shows the structure of an apparatus for determining a missing adjacent cell in an embodiment of the invention; and
Figure 5 is a flowchart of a method for determining a missing adjacent cell in an embodiment of the invention.

### Detailed Description

The present invention is described in detail hereinafter with reference to the embodiments and the accompanying drawings.

The embodiments of the invention are described with a view to supporting the system and method for determining a missing adjacent cell in the 3^{rd} generation (3G) mobile communication technologies, for example, wideband code division multiple access (WCDMA) system, CDMA2000 system, and time division - synchronous code division multiple access (TD-SCDMA) system. The present invention is also applicable to other mobile communication networks, for example, 2^{nd} wireless communication technology - narrowband code division multiple access (CDMA) system.

During soft handover, the UE (for example, mobile phone) uses the same frequency to establish a connection with the new cell before disconnecting from the old cell. When the UE performs handover at the coverage edge of an area covered by two or more NodeBs, the UE receives signals from more than one (typically two) NodeB at a time and multiple NodeBs receive signals from the UE at a time. The UE does not disconnect from the old NodeB unless a certain condition is met.

The reasons why soft handover can be implemented are: (1) the WCDMA system can implement intra-frequency multiplexing of adjacent cells; (2) the UE and the NodeB adopt multiple RAKE receivers for each channel, and can receive signals on multiple channels. During the soft handover, the signals of each NodeB are equivalent to multi-path signals for the UE. The reception of such signals by the UE is equivalent to space diversity.

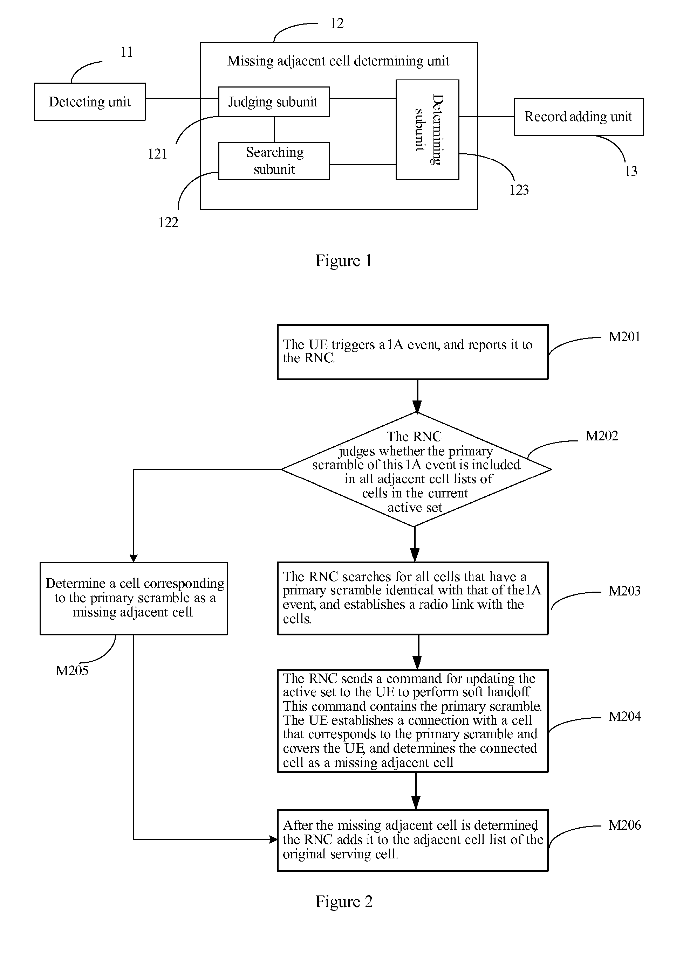

Figure 1 shows the structure of a system for determining a missing adjacent cell in an embodiment of the invention. This system includes a detecting unit 11, a missing adjacent cell determining unit 12 and a record adding unit 13. The detecting unit 11 is configured to detect the signal quality of the cells which are not in an adjacent cell list, and report a trigger event that occurs when the signal quality reaches a trigger threshold to the missing adjacent cell determining unit 12, where trigger events include 1A event, which occurs when the UE detects that the difference between the signal quality of a cell which is not in the adjacent cell list and the signal quality of the current serving cell is less than a preset threshold value. The missing adjacent cell determining unit 12 is configured to judge whether the primary scramble in the trigger event is in the adjacent cell list, and if the primary scramble in the trigger event is not in the adjacent cell list, perform soft handover to one or more cells that are accessible to the UE and correspond to the primary scramble, and determine a missing adjacent cell according to the result of the soft handover. The record adding unit 13 is connected to the missing adjacent cell determining unit 12, and is configured to record the missing adjacent cell that is determined and add it to an adjacent cell list.

The missing adjacent cell determining unit 12 includes a judging subunit 121, a searching subunit 122 and a determining subunit 123. The judging subunit 121 is configured to judge whether the primary scramble in a 1A event is in an adjacent cell list, and if the primary scramble in a 1A event is not in an adjacent cell list, send the judgment result to the searching subunit 122, if the primary scramble in a 1A event is in an adjacent cell list, send the judgment result to the determining subunit 123. The searching subunit 122 is configured to search for one or more cells that are accessible to the UE and correspond to the primary code according to the received judgment result, establish radio links with the one or more cells, command the UE to perform soft handover to the one or more cells that cover the UE, and send the handover result to the determining subunit 123. The determining subunit 123 is connected to the judging subunit 121 and the searching subunit 122, and the determining subunit 123 is configured to determine a missing adjacent cell according to the search result or the handover result. That is, if the primary scramble is found in an adjacent cell list, a cell corresponding to the primary scramble is determined as a missing adjacent cell; or a cell that is connected with the UE is determined as a missing adjacent cell.

In addition, the detecting unit may be integrated into a UE, and the missing adjacent cell determining unit may also be integrated into an RNC or a server. In this embodiment, the missing adjacent cell determining unit is integrated into an RNC, and its specific implementation is as follows:
A UE includes a detecting unit, configured to detect the signal quality of the cells in a detected set, trigger a 1A event when the signal quality reaches a trigger threshold, and send the 1A event report to an RNC in the server. The RNC includes a missing adjacent cell handling unit. For the 1A event report sent by the UE, if the primary scramble in the report is not in the adjacent cell list, the missing adjacent cell handling unit searches for one or more cells that correspond to the primary scramble in the report and are accessible to the UE, establishes radio links with the one or more cells, and commands the UE to perform soft handover; and determines a missing adjacent cell according to the soft handover result. The missing adjacent cell handling unit can add the missing adjacent cell to the adjacent cell list automatically, or record it and wait for the network owner to decide whether to add it to the adjacent cell list. When searching for one or more cells that correspond to the primary scramble in the report, the missing adjacent cell handling unit can find all the cells corresponding to the primary scramble on the network; or, according to the cell where the current UE resides, determine the geographic location of the UE, and select one or more cells corresponding to the primary scramble according to the geographic location of the UE.

The system for determining a missing adjacent cell in this embodiment of the invention can detect a missing adjacent cell automatically, trigger soft handover to the one or more missing adjacent cell and add them to the adjacent cell list. This embodiment not only enables the UE to trigger soft handover timely for a missing adjacent cell, but also adds the missing adjacent cell to the adjacent cell list automatically. The whole process is performed by the RNC automatically without human intervention, thus improving efficiency significantly. Moreover, call drops are reduced through the soft handover triggered by a missing adjacent cell, and hence the network performance is optimized. The embodiment avoids human intervention, requires less manpower, and thus improves the network operation efficiency.

Figure 2 is a flowchart of the method for determining a missing adjacent cell in an embodiment of the invention. This flowchart supposes that the network side is an RNC. The method includes:
Step M201: The UE triggers a 1A event, and reports it to the RNC.
   The UE detects the signal quality of one or more cells which are not in the adjacent cell list, triggers a 1A event when the signal quality reaches a trigger threshold, and sends the 1A event report to the RNC.
   Soft handover is generally triggered through a 1A event. The 1A event is triggered when the UE detects that the difference between the signal quality of a cell and the signal quality of the current serving cell or the current active set is less than a predefined threshold.
   In this embodiment, the conditions for triggering a 1A event are configurable. A cell in a monitored set or a cell in a detected set may both trigger a 1A event.
Step M202: The RNC checks all adjacent cell lists of the cells in the current active set to judge whether any list includes the primary scramble in the 1A event; if any list includes the primary scramble in the 1A event, the RNC performs step M205; if there is no list including the primary scramble in the 1A event, the RNC performs step M203.
Step M203: The RNC searches for all the cells which have a primary scramble identical with that of the 1A event, and establishes radio links with the cells.
   After the RNC receives a 1A event report from the UE, if the primary scramble in the report is not in the adjacent cell list of the RNC, the RNC searches for one ore more cells that have a primary scramble equal to the primary scramble reported by the UE and are accessible to the UE according to the primary scramble in the 1A report, and establishes a radio link with each of the one or more cells.
   In a WCDMA network, a primary scramble is a basis for distinguishing two adjacent cells. Therefore, the UE reports only the detected primary scrambles of the cells in the 1A event report. Generally, there are 512 primary scrambles and the quantity of cells on a network is greater than 512. Therefore, primary scrambles are generally reused in different places of a network. For a primary scramble which is not in the adjacent cell list, the network may have more than one cell corresponding to it.
   When searching for one or more cells that correspond to the primary scramble in the event report, the RNC can find all the cells corresponding to the primary scramble on the network; or, according to the current cell where the UE resides, determine the geographic location of the UE, and select the one or more cells corresponding to the primary scramble according to the geographic location of the UE.
Step M204: The RNC sends a command for updating the active set to the UE to perform soft handover. This command contains the primary scramble. The UE establishes a connection with a cell that corresponds to the scramble and covers the UE. For other cells that correspond to the primary scramble but do not cover the UE, after a waiting period, the radio links will be removed automatically due to failure of connecting to the UE. Therefore, the cell that is connected with the UE is finally determined as a missing adjacent cell.
   The RNC transmits a command for updating the active set to the UE. The command contains the primary scramble. The UE establishes a connection with a cell that corresponds to the primary scramble and really covers the UE. Other cells have the same primary scramble but do not cover the UE, and hence cannot establish a connection with the UE. After a specified period of time, their radio link will surely be removed due to out-of-sync.
   Finally, the cell whose radio link is not removed due to out-of-sync is a missing adjacent cell, that is, the cell that is connected with the UE is a missing adjacent cell.
Step M205: Determine the cell corresponding to the primary scramble as a missing adjacent cell.
   After receiving a 1A measurement report, the RNC can search the adjacent cell lists of cells in the current active set of the UE for the primary scramble. If the primary scramble is found, the cell corresponding to the primary scramble is a missing adjacent cell. This adjacent cell is configured in other cells of the active set but not in the current serving cell. Hence, after the RNC receives a 1A measurement report, it is not necessary for the RNC to search for all cells or establish radio links with all cells that have the same primary scramble. In this way, the redundant workload is reduced and the efficiency is improved.
Step M206: After the missing adjacent cell is determined, the RNC adds it to the adjacent cell list of the original serving cell.
   Once the missing adjacent cell is determined, the RNC can add it to the adjacent cell list of the original serving cell automatically.
   When any UE enters the cell next time, the RNC delivers an adjacent cell list that contains the one or more missing adjacent cells, and the UE can perform timely soft handover normally.

Besides, in this embodiment of the invention, the original serving cell may also be configured into the adjacent cell list of this missing adjacent cell so that bidirectional adjacent cell configuration can be completed. That is, the embodiment of the invention is also applicable to the situation of sharing a radio access network (RAN). In this situation, it is necessary to set operator attributes for each cell, that is, which operators can access the cell and which cannot.

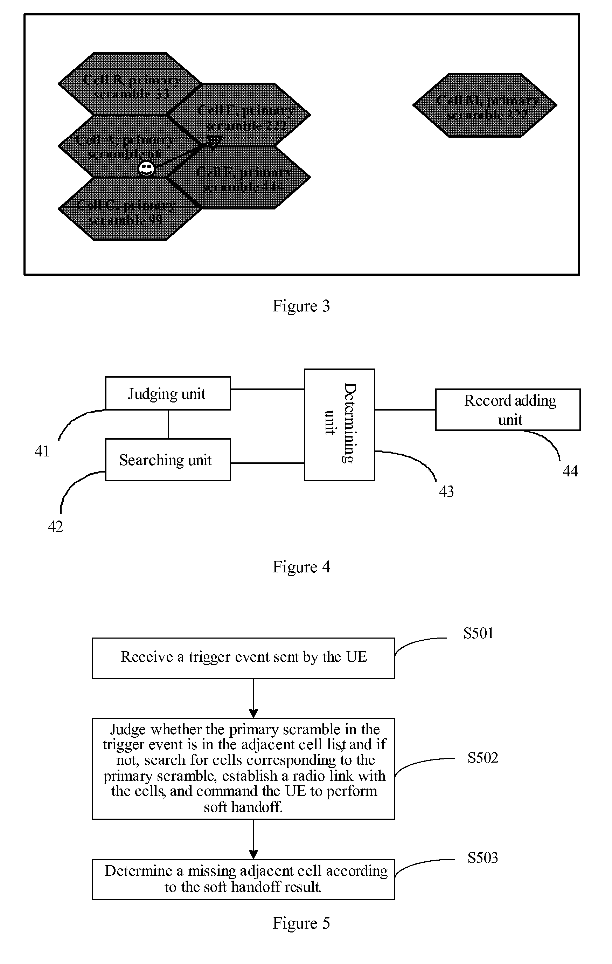

Figure 3 is a diagram of cells after a missing adjacent cell is handled in a shared RAN in an embodiment of the invention. As shown in Figure 3, if cell A, cell B and cell C are accessible to only the users of operator X and operator Z while cell E, cell F and cell M are accessible to only the users of operator Y and operator Z, the specific implementation process is as follows:
If a UE of operator Z originally resides in cell A and already initiates a cell, and is now moving toward cell E (as shown in the figure) while cell E is a new cell. Although cell E is actually an adjacent cell of cell A, the network planner has not configured an adjacency relation between cell E and cell A in the RNC. Therefore, for cell A, cell E is a missing adjacent cell.

When the UE is moving, a 1A event can be triggered according to the cells in the detected set configured in an embodiment of the invention. Therefore, at a proper location, the UE will send a 1A event report, informing the RNC that the signal quality of the cell whose primary scramble is 222 already meets the conditions of 1A event.

Through searching, the RNC finds that more than one cell has the primary scramble 222. Both cell E and cell M have the primary scramble 222. The two cells are not adjacent cells, so the scramble is reused. Besides, both cell E and cell M are accessible to the users of operator Z. Therefore, the RNC establishes radio links with both cell E and cell M, and informs the UE to perform soft handover to the cells whose primary scramble is 222. The UE establishes a connection with cell E. However, it is not possible for any UE to establish a connection to the radio link of cell M, so uplink out-of-sync will occur after a period of time, and the RNC will remove the link.

After finishing the soft handover of the UE, the RNC determines that an adjacent cell E is missing in the configuration of cell A, and adds it to the configuration. Suppose that the network is a shared RAN, where cells A, B and C are accessible only to the users of operators X and Z and cells E, F and M are accessible only to the users of operators Y and Z. The attribute of cell A indicates that the cell is accessible only to the users of operators X and Z, and the attribute of cell E indicates that the cell is accessible only to the users of operators Y and Z. The RNC finds that the two cells have different operator attributes, and hence maintains different adjacent cell lists for different operators. In the adjacent cell list of operator Z, cell A and cell E is adjacent cell to each other; in the adjacent cell list of operators X and Y, cell A and cell E are not adjacent cells.

Moreover, an embodiment of the invention provides an apparatus for determining a missing adjacent cell, as illustrated in Figure 4. The apparatus includes a judging unit 41, a searching unit 42, a determining unit 43 and/or a record adding unit 44. The judging unit 41 is configured to judge whether the primary scramble in a received trigger event is in an adjacent cell list; send a negative judgment result to the searching unit; and send a positive judgment result to the determining unit. The searching unit 42 is configured to search for one or more cells that are accessible to the UE and correspond to the primary scramble according to the judgment result, establish radio links with the one or more cells, and command the UE to perform soft handover to the cells that cover the UE; and send the handover result to the determining unit 43. The determining unit 43 is connected to the judging unit 41 and the searching unit 42, and is configured to determine a cell corresponding to the primary scramble in the adjacent cell list as a missing adjacent cell according to the search result, or determine a connected cell as a missing adjacent cell according to the soft handover result. The record adding unit 44 is connected to the determining unit, and is configured to record a missing adjacent cell that is determined and add it to the adjacent cell list.

The functions of the units in the apparatus are equivalent to the functions of the corresponding units in the foregoing system, and are not described further.

Accordingly, an embodiment of the invention provides a method for determining a missing adjacent cell, as illustrated in Figure 5. The method includes the following steps:
Step 5501: Receive a trigger event sent by the UE. The trigger event includes a 1A event, which occurs when the UE detects that the difference between the signal quality of a cell which is not in the adjacent cell list and the signal quality of the current serving cell is less than a preset threshold value.
Step S502: Judge whether the primary scramble in the trigger event is in the adjacent cell list, and if the primary scramble in the trigger event is not in the adjacent cell list, search for one or more cells that correspond to the primary scramble, establish radio links with the one or more cells, and command the UE to perform soft handover.
Step S503: Determine a missing adjacent cell according to the soft handover result.

The specific implementation process of the method in this embodiment of the invention is the same as the specific implementation process of the foregoing method on the network side, and is not described further.

Therefore, this embodiment is applicable to various networks, and may handle missing adjacent cells on the network. By using only a test UE that supports reporting of a detected set, the embodiment of the invention can add the configuration of all adjacent cell relations automatically for the network without intra-frequency adjacent cells during a drive test, and is of great practical value. The embodiment of the invention supports the UE that supports reporting of a detected set, and brings no call drops even if any adjacent cell is missing. Moreover, the RNC updates the adjacent cell list according to the reported information, thus improving the user experience and ensuring network reliability and continuous automatic maintenance and update.

Therefore, with the embodiment of the invention, even if no intra-frequency adjacent cell is configured for a wireless network at the beginning, the RNC adds the configuration of all adjacent cells to the adjacent cell list automatically while the user is moving, thus saving manpower and resources significantly and improving the network operation efficiency.

Although the invention has been described through some preferred embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A system for determining a missing adjacent cell, comprising:
a detecting unit and a missing adjacent cell determining unit, wherein the detecting unit is configured to detect signal quality of cells which are not in an adjacent cell list and report a trigger event that occurs when the signal quality reaches a trigger threshold to the missing adjacent cell determining unit; and
the missing adjacent cell determining unit is configured to judge whether a primary scramble in the trigger event is in the adjacent cell list, and if the primary scramble in the trigger event is not in the adjacent cell list, perform soft handover to one or more cells which are accessible to the UE and corresponding to the primary scramble, and determine a missing adjacent cell according to a soft handover result.

2. The system according to claim 1, wherein the missing adjacent cell determining unit comprises a judging subunit, a searching subunit and a determining subunit,
wherein the judging subunit is configured to judge whether the primary scramble in the trigger event is in the adjacent cell list, send the judgment result to the searching subunit if the primary scramble in the trigger event is not in the adjacent cell list, and send the judgment result to the determining subunit if the primary scramble in the trigger event is in the adjacent cell list,
the searching subunit is configured to search for cells which are accessible to the UE and corresponding to the primary code according to the received judgment result, establish radio links with the one or more cells, command the UE to perform soft handover to the one or more cells which cover the UE, and send the handover result to the determining subunit, and
the determining subunit is connected to the judging subunit and the searching subunit, and the determining subunit is configured to determine the missing adjacent cell according to the search result or the handover result.

3. The system according to claim 1 or 2, further comprising:
a record adding unit, connected to the missing adjacent cell determining unit and configured to record the missing adjacent cell or add the missing adjacent cell to the adjacent cell list.

4. The system according to claim 1, wherein the detecting unit is integrated into a UE, and the missing adjacent cell determining unit may also be integrated into an RNC or a server.

5. A method for determining a missing adjacent cell, comprising:
reporting, by an UE, a trigger event that occurs when the signal quality reaches a trigger threshold;
judging, by a network, whether the primary scramble in the trigger event is in an adjacent cell list;
performing, by the network, soft handover to one or more cells corresponding to the primary scramble if the primary scramble in the trigger event is not in the adjacent cell list; and
determining, by the network, a missing adjacent cell according to a soft handover result.

6. The method according to claim 5, wherein the trigger event is a 1A event and the 1A event occurs when the UE detects that the difference between the signal quality of a cell which is not in the adjacent cell list and the signal quality of the current serving cell of the UE is less than a preset threshold.

7. The method according to claim 6, wherein the performing, by the network, soft handover to one or more cells corresponding to the primary scramble if the primary scramble in the trigger event is not in the adjacent cell list comprises:
searching for one or more cells corresponding to the primary scramble if the primary scramble in the 1A event is not in the adjacent cell list;
establishing radio links with the one or more cells;
transmitting a command for updating the active set to the UE; and
establishing, by the UE, a connection with a cell corresponding to the primary scramble and covering the UE, wherein the command comprises the primary scramble.

8. The method according to claim 6, comprising:
determining a cell corresponding to the primary scramble as a missing adjacent cell if the primary scramble in the 1A event is in the adjacent cell list.

9. The method according to claim 6 or 8, comprising:
detecting, by the UE, signal quality of cells in a detected set; and
triggering, by the UE, a 1A event when the signal quality reaches a preset trigger threshold.

10. The method according to claim 7, wherein searching for one or more cells corresponding to the primary scramble comprising:
searching all cells corresponding to the primary scramble, or,
determining a geographic location of the UE according to a current cell where the UE resides, and selecting the one or more cells corresponding to the primary scramble according to the geographic location of the UE.

11. The method according to claim 9, comprising:
adding the missing adjacent cell into the adjacent cell list; and
adding the current serving cell of the UE to an adjacent cell list of the missing adj acent cell.

12. The method according to claim 11, comprising:
maintaining different adjacent cell list for different operators if the network is shared by different operators; and
determining whether to add the missing adjacent cell into the adjacent cell list according to the attributes of the missing adjacent cell and the current serving cell.

13. The method according to claim 9, comprising:
recording the missing adj acent cell, and
adding the missing adjacent cell to the adjacent cell list according to a decision.

14. An apparatus for determining a missing adjacent cell, comprising:
a judging unit, a searching unit and a determining unit,
wherein the judging unit is configured to judge whether a primary scramble in a trigger event is in an adjacent cell list, send the judgment result to the searching unit if the primary scramble in the trigger event is not in an adjacent cell list, and send the judgment result to the determining unit if the primary scramble in the trigger event is in an adjacent cell list,
the searching unit is configured to search for cells which are accessible to the UE and corresponding to the primary scramble according to the received judgment result, establish radio links with the one or more cells, command the UE to perform soft handover to the one or more cells which cover the UE, and send the handover result to the determining unit, and the determining unit is connected to the judging unit and the searching unit, and the determining unit is configured to determine the missing adjacent cell according to the search result or the soft handover.

15. The apparatus according to claim 14, comprising:
a record adding unit, connected to the missing adjacent cell determining unit and configured to record the missing adjacent cell or add the missing adjacent cell to the adjacent cell list.

16. A method for determining a missing adjacent cell, comprising:
receiving a trigger event sent by the UE;
judging whether the primary scramble in the trigger event is in an adjacent cell list;
searching for one or more cells corresponding to the primary scramble if the primary scramble in the trigger event is not in the adjacent cell list;
establishing radio links with the one or more cells;
commanding the UE to perform soft handover; and
determining a missing adjacent cell according to the soft handover result.

17. The method according to claim 16, wherein the trigger event is a 1A event and the 1A event occurs when the UE detects that the difference between the signal quality of a cell which is not in the adjacent cell list and the signal quality of the current serving cell is less than a preset threshold.
